# EUROPÄISCHE PATENTSCHRIFT

(11) **EP 1 424 230 B1**
(45) Veröffentlichungstag und Bekanntmachung des Hinweises auf die Patenterteilung: **28.12.2005**
(21) Anmeldenummer: 03023496.7
(22) Anmeldetag: 18.10.2003
(51) Int. Cl.: B60H 1/00, B60H 1/24

(54) **Fahrgastzelle**
Passenger compartment
Habitacle passager

(30) Priorität: 29.11.2002 DE 10255803
(43) Veröffentlichungstag der Anmeldung: 02.06.2004
(73) Patentinhaber: DaimlerChrysler AG, 70567 Stuttgart (DE)
(72) Erfinder: Bletzinger, Uli, 70327 Stuttgart (DE); Böttcher, Erich, 71139 Ehningen (DE); Breymeier, Karl, 89250 Senden (DE); Ernst, Ansgar, 71263 Weil der Stadt (DE)

(56) Entgegenhaltungen:
- DE-A- 3 744 500
- US-A- 2 069 413
- US-A- 5 399 121
- US-A- 6 062 635
- US-A1- 2001 029 162

## Beschreibung

Die Erfindung betrifft eine Fahrgastzelle eines Fahrzeugs, insbesondere eines Großraumfahrzeugs, gemäß dem Oberbegriff des Patentanspruchs 1.

Bei einem bekannten Großraumfahrzeug mit Fondklimaanlage (Transporter Mercedes MB140 "Sprinter" mit Fondklimagerät der Firma Istana) ist das Fondklimagerät vor den Hecksäulen der Rohbaustruktur der Fahrgastzelle unter dem Dach angeordnet. Abgehend von dem Fondklimagerät führt links und rechts entlang den Dachkanten je ein Längsluftkanal bis zu den B-Säulen. In den beiden Längsluftkanälen sind Luftauslaßöffnungen zum Ausblasen von klimatisierter Luft nach unten vorhanden.

Bei einer bekannten Belüftungsvorrichtung für eine Fahrgastzelle (DE 37 44 500 A1) ist ein Rohr umlaufend am Dachrand entlanggeführt und mit Düsen versehen. Das Rohr ist mit einem Gebläse verbunden, das Luft über einen Luftfilter ansaugt und in das Rohr einbläst. Die Düsen sind nach unten gerichtet und blasen Luft von oben nach unten direkt auf die Frontscheibe, auf die Heckscheibe und auf die Seitenscheiben der Fahrgastzelle. Dadurch wird ein Beschlagen und ein Zufrieren der Scheiben vermieden und bei Einblasen von Warmluft eine Entfrostung für die Scheiben erreicht.

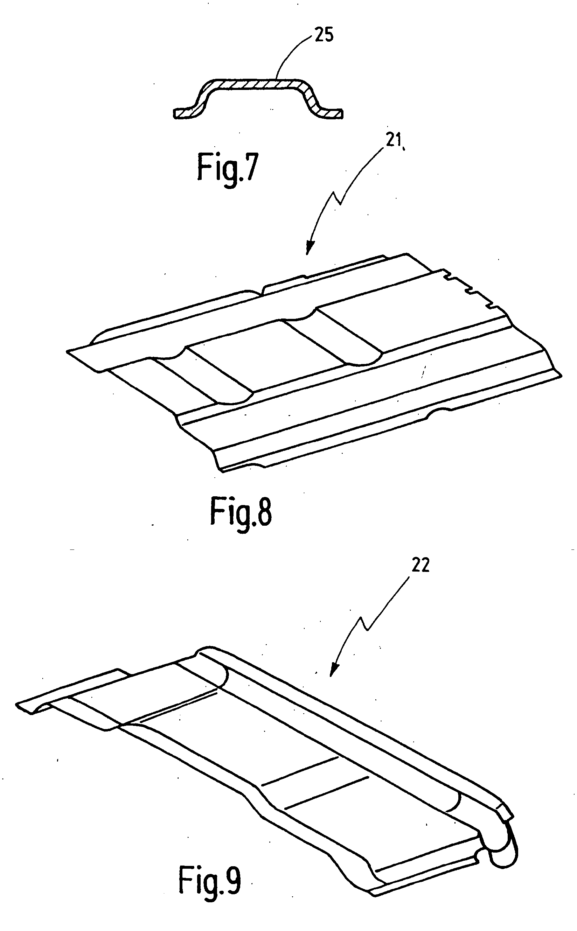

Bei einer bekannten Fahrgastzelle eines Kraftfahrzeugs mit einem zwei Sitzreihen ä zwei Sitze aufweisenden Fond (US 2001/0029162 A1) ist ein Fondklimagerät im rückwärtigen Bereich des Fonds am Boden oder an der Dachunterseite angeordnet. An dem Fondklimagerät sind vier Luftkanäle angeschlossen, die sich längs der Seitenwände des Fonds erstrecken. Dabei verlaufen zwei Kaltluftkanäle an der Dachunterseite und zwei Warmluftkanäle am Fondboden. Jeder Luftkanal weist den Sitzreihen zugeordnete Luftausströmöffnungen auf, so dass der linke Sitz jeder Sitzreihe von den links verlaufenden Warm- und Kaltluftkanälen mit Warm- bzw. Kaltluft beaufschlagt wird und der rechte Sitz jeder Sitzreihe von den rechts verlaufenden Warm- und Kaltluftkanälen mit Warm- bzw. Kaltluft beaufschlagt wird. In Abwandlung des Belüftungsprinzips (Fig. 8) erstreckt sich bei jeder Sitzreihe ein an den beiden Kaltluftkanälen angeschlossener Querluftkanal quer unter der Dachunterseite. Im Querluftkanal sind die Kaltluftausströmöffnungen ausgebildet, wobei jeweils eine Kaltluftausströmöffnung einem Sitz der Sitzreihe zugeordnet und zwischen diesen beiden Kaltluftausströmöffnungen mittig noch eine dritte Kaltluftausströmöffnung vorgesehen ist.

Bei einer bekannten Fahrgastzelle eines Kraftfahrzeugs (US 6 062 635) sind Luftkanäle für die Luftführung an der Dachunterseite angeordnet und in einer Dachabdeckung, dem sog. Himmel, integriert. Hierzu sind auf einer Kunststoffschale U-förmige Rinnen aufgesetzt und mit der Kunststoffschale durch Kleben oder Schweißen luftdicht verbunden. Auf diese Weise ist ein an einem Klimagerät anschließbarer Luftquerkanal und zwei links und rechts nahe den Seitenwänden der Fahrgastzelle sich erstreckende Luftlängskanäle ausgebildet, wobei die Luftlängskanäle mit Luftausströmern versehen sind.

Bei einer bekannten Fahrgastzelle eines Kraftfahrzeugs (US 2 069 413) ist aus Gründen der Geräuschdämpfung an der Dachunterseite eine vibrationsfreie Platte befestigt. Die Platte besteht aus zwei voneinander beabstandeten dünnen Außenflächen, die sich über Distanzstücke aufeinander abstützen. Die den Zwischenraum zwischen den dünnen Außenflächen ausfüllenden Distanzstücke können verschiedenartig ausgebildet sein, z.B. als gewelltes Papier, als zellulares Papiergefüge, als Waben oder Eierkarton. Auf der der Dachunterseite zugekehrten Außenfläche der Platte ist eine Dämpfungsschicht aufgelegt, die aus porösem, geräuschdämpfendem Material, z.B. einer Haarmatte, besteht.

Bei einer ebenfalls bekannten Fahrgastzelle eines Kraftfahrzeugs (US 5 399 121) ist im Heck des Kraftfahrzeugs ein Klimagerät mit Gebläse angeordnet, an dem ein Luftverteilungssystem angeschlossen ist. Das Luftverteilungssystem besteht aus mehreren, miteinander verbundenen Luftkanälen, die in verschiedenen Bereichen der Fahrgastzelle verlaufen. Ein L-förmig ausgebildeter Hauptkanal erstreckt sich von dem Klimagerät nach vorn bis zu einer zwischen zwei Seitenfenstern in der linken Seitenwand der Fahrgastzelle vorhandenen Säule und ist dann entlang dieser Säule bis an die Dachunterseite geführt. An den Hauptkanal schließt sich ein Querkanal an, der quer an der Dachunterseite bis zu der gegenüberliegenden Säule zwischen den beiden Seitenfenstern in der rechten Seitenwand der Fahrgastzelle verläuft. Der Querkanal setzt sich in einen Seitenkanal fort, der entlang der rechten Säule verläuft. Sowohl der Hauptkanal in seinem über die linke Säule verlaufenden Kanalabschnitt als auch der Seitenkanal weisen mehrere Luftausströmöffnungen auf, deren Luftausströmrichtung jeweils auf die vordere und hintere Seitenscheibe gerichtet sind, um die Seitenscheiben in der linken und rechten Seitenwand der Fahrgastzelle beschlagfrei zu halten.

Der Erfindung liegt die Aufgabe zugrunde, eine optimierte Klimatisierung des Fonds einer Fahrgastzelle zu schaffen, wobei die hierzu erforderlichen Bauteile räumlich und optisch gut in die Fahrgastzelle integrierbar sein sollen und einfach montiert werden können.

Die Aufgabe ist erfindungsgemäß durch die Merkmale des Patentanspruchs 1 gelöst.

Die erfindungsgemäße Fahrgastzelle hat den Vorteil, daß die die Sitze belegenden Fahrgäste individuell und zugfrei mit klimatisierter Luft versorgt werden, wobei das Luftvolumen über die Luftausströmer individuell eingestellt werden kann. Die den Sitzreihen zugeordneten Querluftkanäle sorgen dabei auch für eine gleich günstige Klimatisierung der mittleren Sitze in den Sitzreihen. Die Anordnung des Fondklimageräts mit den dazugehörigen Luftkanälen im Dachbereich ermöglicht kurze Luftwege bis zu den Luftausströmern und eine weitgehend vergleichmäßigte Luftverteilung innerhalb des Fonds. Durch die Aufteilung des Himmels für den Fond in zwei zusammensteckbare Himmelsegmente mit der Verteilung von Fondklimagerät und Luftkanälen mit Luftausströmern wird ein steifes, leichtgewichtiges Montagemodul eines Klimahimmels geschaffen, das einfach und schnell montiert werden kann und zu keiner Beeinträchtigung der Kopffreiheit im Fond führt. Bei der Montage wird zunächst das Fondklimagerät auf das hintere Himmelsegment aufgeschoben. Dann werden die Längsluftkanäle im vorderen Himmelsegment mittels Blasformteile an das Fondklimagerät angeschlossen. Die beiden Himmelsegmente werden nunmehr miteinander verbunden und mit Abstand von der Dachunterseite befestigt, beispielsweise an der Dachversteifung dienenden sog. Spriegeln, die auf der Dachunterseite quer zur Längsachse der Fahrgastzelle verlaufen.

Vorteilhafte Ausführungsformen der erfindungsgemäßen Fahrgastzelle mit zweckmäßigen Weiterbildungen und Ausgestaltungen der Erfindung sind in den weiteren Patentansprüchen angegeben.

Gemäß einer bevorzugten Ausführungsform der Erfindung ist die Integration der Luftkanäle mittels Hutprofil aufweisender Kanalrinnen vorgenommen, die als einstückiges Tiefziehteil gefertigt sind. Das Tiefziehteil wird auf die der Dachunterseite zugekehrte Außenseite des vorderen Himmelsegments aufgesetzt und mit diesem mittels Ultraschallschweißen fest verbunden.

Der Himmel ist gemäß einer vorteilhaften Ausführungsform der Erfindung aus kaschierten Tubus-Waben-Platten gebildet, die vorzugsweise auf der von der Dachunterseite abgekehrten Innenseite sehr fein perforiert sind. Damit ist das Himmelmodul nicht nur steif und leichtgewichtig, sondern ist auch flammhemmend und temperaturbelastbar und nimmt keine Feuchtigkeit auf. Bei der Verschrottung des Fahrzeugs ist das Klimahimmelmodul nach Abnahme des Fondklimageräts sehr gut recyclebar. Zusätzliche Kaschierwerkzeuge sind nicht erforderlich, da der Kaschiervorgang bereits vor Formung der Platten durchgeführt worden ist.

Gemäß einer vorteilhaften Ausführungsform der Erfindung ist zum Beschlagfreihalten der Seitenscheiben im Fond an jedem Längsluftkanal ein über mindestens eine Seitenscheibe des Fonds sich erstreckender Scheibenluftkanal angeschlossen, der Luftaustrittsschlitze mit zu den Seitenscheiben gerichteter Luftaustrittsrichtung aufweist. Der Scheibenkanal ist dabei im Bereich des Kopfaufschlagpunktes eines auf den äußeren Sitzplatz plazierten (und angeschnallten) Fahrgastes angeordnet, so daß er gleichzeitig als Energieabsorptionselement im Falle eines Crash herangezogen werden kann. Der Anschluß des Scheibenkanals an den zugeordneten Längsluftkanal erfolgt mittels mindestens eines der Kontur des Dachverlaufs angepaßten Verbindungskanals, der vorzugsweise als Blasformteil hergestellt wird.

Die Erfindung ist anhand eines in der Zeichnung dargestellten Ausführungsbeispiels im folgenden näher beschrieben. Es zeigen:
- Fig. 1: einen etwas schematisierten Längsschnitt eines Großraumfahrzeugs mit einem mit zwei jeweils dreisitzigen Sitzreihen bestuhlten Fond,
- Fig. 2: eine etwas schematisierte Draufsicht des Großraumfahrzeugs in Fig. 1 mit teilweise aufgeschnittenem Dach,
- Fig. 3: einen vergrößerten Ausschnitt des Schnitts in Fig. 1,
- Fig. 4: einen vergrößerten Ausschnitt eines Halbquerschnitts gemäß Schnittlinie IV - IV in Fig. 2,
- Fig. 5: eine Unteransicht eines Klimahimmelmoduls für den Fond des Großraumfahrzeugs in Fig. 1 und 2,
- Fig. 6: eine perspektivische Ansicht eines Fondklimageräts in Verbindung mit einem Tiefziehteil zur Bildung von Luftkanälen,
- Fig. 7: einen Schnitt längs der Linie VII - VII in Fig. 6,
- Fig. 8: eine Draufsicht eines vorderen Himmelsegments des Klimahimmelmoduls in Fig. 5 bei entferntem Tiefziehteil, perspektivisch dargestellt,
- Fig. 9: eine Draufsicht eines hinteren Himmelsegments des Klimahimmelmoduls in Fig. 5 bei entferntem Fondklimagerät, perspektivisch dargestellt,
- Fig. 10: eine perspektivische Draufsicht des Klimahimmelmoduls in Fig. 5,
- Fig. 11: ausschnittweise einen Längsluftkanal des Klimahimmelmoduls mit daran angeschlossenem Scheibenluftkanal, perspektivisch dargestellt.

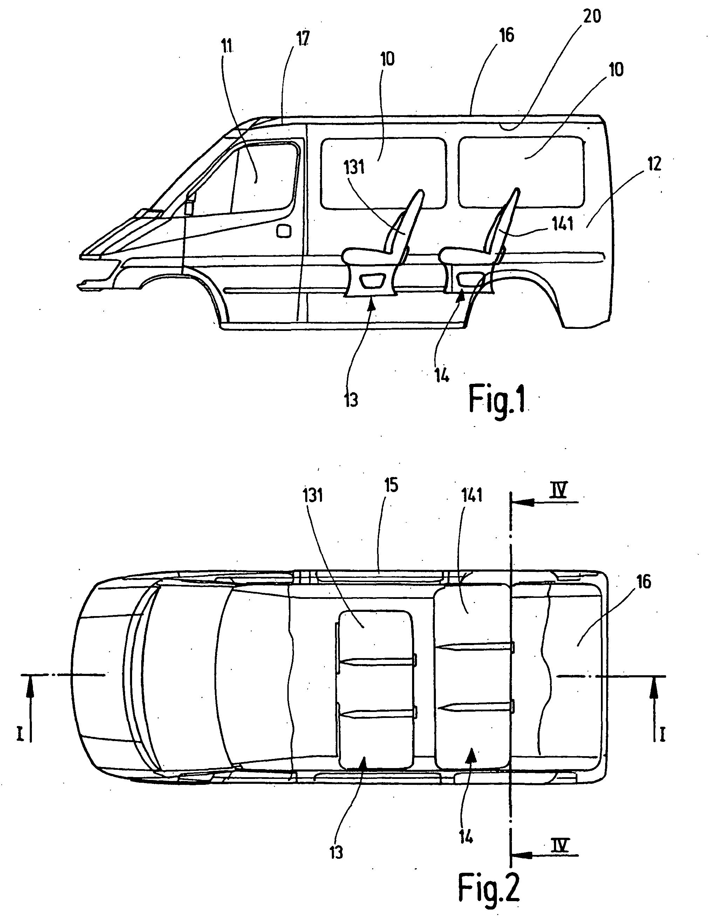

Die in Fig. 1 und 2 im Längsschnitt und Draufsicht dargestellte Fahrgastzelle eines Großraumfahrzeugs weist einen Frontraum 11 und einen Fond 12 auf. Der Frontraum 11 ist, wie bekannt und hier nicht weiter dargestellt, mit einem Fahrer- und einem Beifahrersitz ausgestattet. Der Fond 12 ist mit zwei jeweils dreisitzigen Sitzreihen 13, 14 bestuhlt, von denen die vordere Sitzreihe 13 drei schmale Sitze 131 und die hintere Sitzreihe 14 drei breitere Sitze 141 aufweist. In der Seitenwand der Fahrgastzelle ist im Bereich der vorderen Sitzreihe 13 eine Schiebetür 15 zum Einstieg in den Fond 12 vorgesehen.

Die Fahrgastzelle weist eine Rohbaustruktur mit zwei Hecksäulen, zwei vorderen A-Säulen und zwei mittlere B-Säulen auf, von denen die beiden Hecksäulen und die beiden B-Säulen den Fond 12 und die beiden A-Säulen und die beiden B-Säulen den Frontraum 11 begrenzen. Die Rohbaustruktur ist mit einem Dach 16 abgedeckt, das von innen mit einem mit Abstand von der Dachunterseite angeordneten Himmel 17 verkleidet ist.

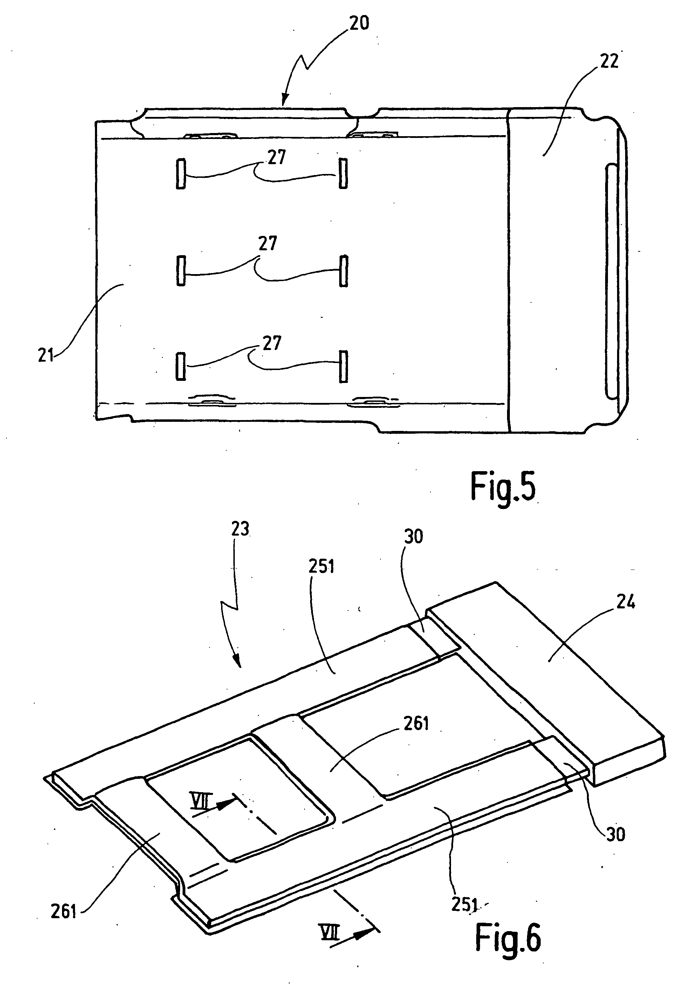

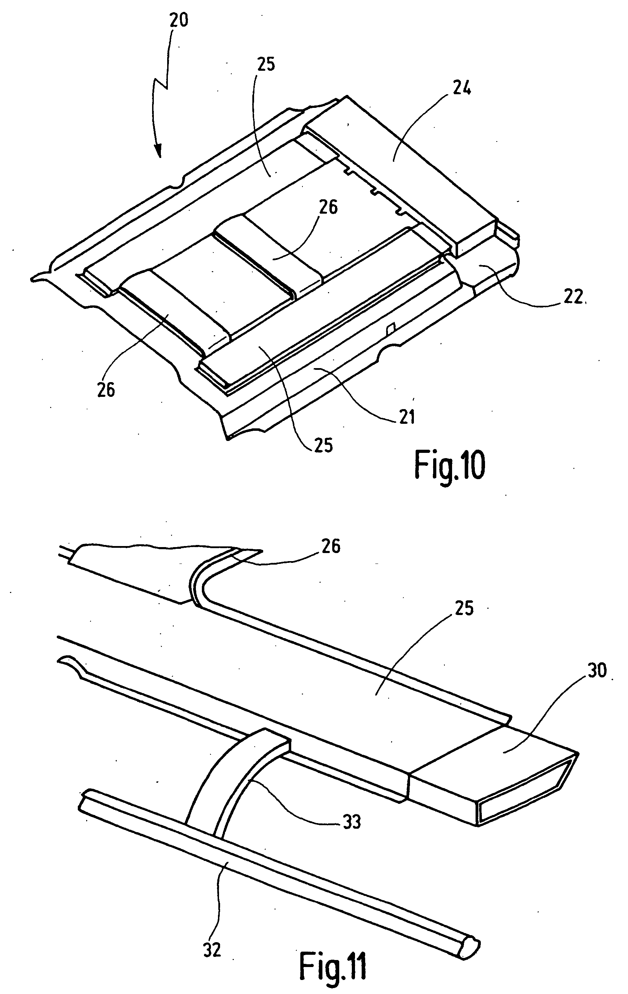

Der Fond 12 ist vollklimatisiert, wobei zum Zwecke einer optimalen Klimatisierung in jedem Sitzbereich, einer kostengünstigen Fertigung und einer schnellen Montage der Himmel 17 im Fondbereich als Klimahimmelmodul 20 ausgebildet ist, wie er in Fig. 5 in Unteransicht, also von den Sitzreihen 13, 14 aus gesehen, und in Fig. 10 in Draufsicht, also vom Dach 16 aus gesehen, dargestellt ist. Der Klimahimmelmodul 20, der sich mit Abstand von der Dachunterseite über den gesamten Fond 12 erstreckt, ist an der Dachbeplankung, z.B. an den der Dachversteifung dienenden Spriegeln 18, befestigt, z.B. mit Stahl- Kegelkopf-Nadeln, Schnapphaken, Klammern, Klemmprofilen u.ä..

Der Klimahimmelmodul 20 ist aus insgesamt vier Teilen zusammengesetzt, und zwar aus einem vorderen Himmelsegment 21 (Fig. 8) einem hinteren Himmelsegment 22 (Fig. 9) einem Tiefziehteil 23 aus Polypropylen mit Kanalrinnen zur Bildung von Luftkanälen (Fig. 6) und einem Fondklimagerät 24 (Fig. 6 und 10). Die beiden Himmelsegmente 21, 22 sind aus kaschierten Tubus-Waben-Platten gefertigt, indem die vorgewärmten Platten mittels einer Formpresse in die gewünschte Form gebracht werden. Das Tubus-Waben-Material zeichnet sich durch hohe Steifigkeit und geringes Gewicht aus. Die fertige Form wird mit entsprechenden Ausschnitten und Ausstanzungen versehen. Zur Verbesserung der Dämpfung von Dachgeräuschen sind die Tubus-Waben-Platten auf der von der Dachunterseite abgekehrten Innenseite sehr fein perforiert.

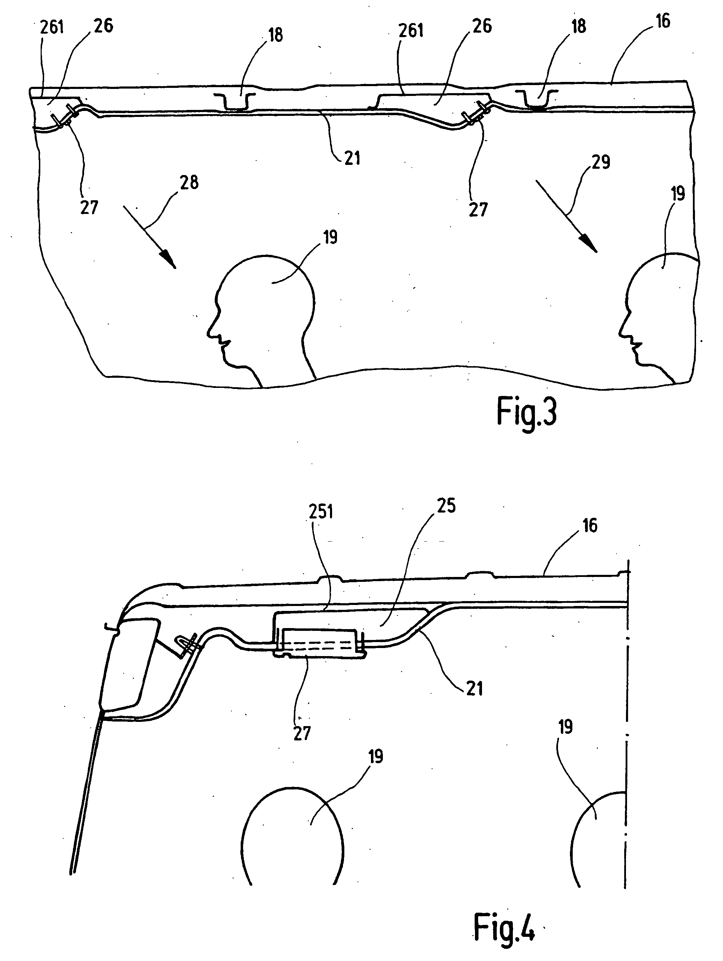

Das Tiefziehteil 23 zur Integrierung von Luftkanälen in den Klimahimmelmodul 18 weist zwei im Parallelabstand voneinander verlaufende Längskanalrinnen 251 und zwei parallele Querkanalrinnen 261 auf, die mit den beiden Längskanalrinnen 251 einstückig verbunden sind. Die Kanalrinnen 251, 261 haben jeweils ein Hutprofil, wie dies für eine Längskanalrinne 251 in Fig. 7 dargestellt ist. Das ebenfalls aus Polypropylen hergestellte Tiefziehteil 23 wird auf das vordere Himmelsegement 21 aufgesetzt und längs der Hutränder der Kanalrinnen 251, 261 mit dem vorderen Himmelsegment 21 per Ultraschallschweißen fest verschweißt, wodurch zwischen Himmelsegment 21 und Kanalrinnen 251, 261 die eigentliche Luftkanäle 25, 26 entstehen. Die Anordnung der Längsluftkanäle 25 und der Querluftkanäle 26 ist dabei so getroffen, daß bei im Fond 12 montiertem Klimahimmelmodul 20 die Längsluftkanäle 25 sich entlang der Dachkante bis zu den B-Säulen erstrecken und jeweils ein Querluftkanal 26 mit Abstand vor jeweils einer Sitzreihe 13, 14 verläuft. Im vorderen Himmelsegment 21 sind im Bereich der Kanalrinnen 251, 261 Öffnungen vorgesehen, in denen jeweils ein Luftausströmer 27 eingesetzt ist (Fig. 5). Jeder Luftausströmer 27 ist dabei einem Sitz 131, 141 in einer Sitzreihe 13, 14 räumlich zugeordnet, so daß die Anzahl der Luftausströmer 27 der Anzahl der Sitze in den beiden Sitzreihen 13, 14 entspricht. Die drei jeweils einer Sitzreihe 13 bzw. 14 zugeordneten Luftausströmern 27 liegen dabei in einer zur Sitzreihe 13 bzw. 14 parallelen Fluchtlinie und besitzen eine einstellbare Luftausströmrichtung, die in der Grundstellung zu einem einen Sitz einnehmenden Fahrgast gerichtet ist. In Fig. 3 ist die Luftausströmrichtung aus den Luftausströmern mit Pfeilen 28 und 29 gekennzeichnet. Mit 19 ist der Kopf jeweils eines auf dem mittleren Sitz 131 der vorderen Sitzreihe 13 und auf dem mittleren Sitz 141 der hinteren Sitzreihe 14 sitzenden Fahrgastes angedeutet.

Im Längsschnitt der Fig. 3 sind nur die beiden den mittleren Sitzen 131, 141 in jeder Sitzreihe 13, 14 zugeordneten Luftausströmer 27 zu sehen, die in jeweils eine in einem Querluftkanal 26 liegende Öffnung im vorderen Himmelsegment 21 eingesetzt sind. Für die beiden äußeren Sitze 131, 141 in jeder Sitzreihe 13, 14 sind die zugeordneten Luftausströmer 27 mit einstellbarer Luftausströmrichtung in einer Öffnung des vorderen Himmelsegments 21 eingesetzt, die im Bereich eines Längsluftkanals 25 liegt. Ein solcher Luftausströmer 27 für den linken äußeren Sitz 141 der hinteren Sitzreihe 14 ist in der Schnittdarstellung der Fig. 4 zu sehen.

Bei der Montage werden die beiden hinteren, offenen Enden der im vorderen Himmelsegment 21 integrierten Längsluftkanäle 25 über Blasformteile 30 mit zwei Luftauslässen des Fondklimageräts 24 verbunden und das das aufgeschobene Fondklimagerät 24 tragende, hintere Himmelsegment 22 an dem vorderen Himmelsegment 21 befestigt, z.B. eingehängt, und gemeinsam über Klemmprofile, Klammern, Kegelkopf-Nadeln und dgl. an der Beplankung des Dachs, vorzugsweise an den Spriegeln 18, befestigt. Im hinteren Himmelsegment 22 ist noch eine Umluftöffnung 31 vorgesehen (Fig. 5), über welche das Fondklimagerät 24 Umluft aus dem Fond 12 anzusaugen vermag.

Die Seitenscheiben 10 des Fond 12 neigen bei großen Temperaturunterschieden zwischen der Umgebungs- und Innenraumtemperatur und hoher Luftfeuchtigkeit dazu, zu beschlagen. Bei starker Sonneneinstrahlung und hoher Außentemperatur tritt zusätzlich eine enorme Strahlungswärme durch die Seitenscheiben 10 hindurch in den Fond 12. Um einerseits das Beschlagen der Seitenscheiben 10 zu verhindern und andererseits eine Verbesserung des Klimakomforts bei hoher Sonneneinstrahlung zu bewirken, ist jeder Seitenscheibe 10 ein Scheibenkanal 32 zur Belüftung der Seitenscheiben 10 zugeordnet. In Fig. 11 ist ein solcher Scheibenkanal 32 in Verbindung mit einem ausschnittweise dargestellten Längsluftkanal 25 des Klimahimmelmoduls 20 zu sehen. Der Scheibenkanal 32 erstreckt sich oberhalb einer jeden Seitenscheibe 10 und ist über einen Verbindungskanal 33, der der Kontur des Dachverlaufs angepaßt ist, an den Längsluftkanal 25 angeschlossen. Jeder Scheibenkanal 32 liegt direkt im Bereich des Kopfaufschlagpunkts eines der die äußeren Sitze 131, 141 in den beiden Sitzreihen 13, 14 besetzenden Fahrgäste, so daß der Scheibenkanal 32, der ebenso wie der Verbindungskanal 33 als Blasformteile aus Polypropylen hergestellt ist, als Energieabsorptionselement bei einem eventuellen Crash mitbenutzt werden kann. An der nach unten weisenden Unterseite der Scheibenkanäle 32 sind Luftschlitze so angeordnet, daß die aus den Luftschlitzen ausgeblasene Luft auf die Seitenscheiben 10 auftrifft. Über eine hier nicht dargestellte, verschließbare Belüftungsregelung kann der Luftaustritt über die Scheibenkanäle 32 geregelt werden.

Die Erfindung ist nicht auf das beschriebene Ausführungsbeispiel beschränkt. So können je nach Ausführung und Anordnung der Längsluftkanäle die Luftausströmer in Zuordnung zu jeweils einem Sitz auch ausschließlich in den Querkanälen angeordnet sein.

## Patentansprüche

1. Fahrgastzelle eines Fahrzeugs, insbesondere eines Großraumfahrzeugs, mit einem mit mehrsitzigen Sitzreihen (13, 14) bestuhlten Fond (12), mit einem Dach (16), einem die Dachunterseite verkleidenden Himmel (17) und mit Seitenscheiben (10), mit einem an dem rückwärtigen Ende des Fonds (12) an der Dachunterseite angeordneten Fondklimagerät (24) mit Luftauslässen, an denen jeweils einer von zwei rechts und links unter dem Dach (16) bis zum vorderen Ende des Fonds (12) verlaufenden Längsluftkanälen (25) angeschlossen ist, und mit unter dem Dach (16) verlaufenden, an den beiden Längsluftkanälen (25) angeschlossenen Querluftkanälen, von denen jeweils einer einer Sitzreihe (13, 14) zugeordnet ist und mit Abstand vor dieser verläuft, wobei in den Luftkanälen (25, 26) mindestens eine der Anzahl der Sitze (131, 141) in den Sitzreihen (13, 14) entsprechende Zahl von Luftausströmern (27) mit vorzugsweise in Grenzen einstellbare Luftausströmrichtung angeordnet ist, von denen jeweils einer einem Sitz (131, 141) räumlich zugeordnet ist,
**dadurch gekennzeichnet,**
**dass** der über den Fond (12) sich spannende Bereich des Himmels (17) aus einem vorderen und einem hinteren, miteinander verbindbaren Himmelsegment (21, 22) zusammengesetzt ist und dass das hintere Himmelsegment (22) das Fondklimagerät (24) abdeckt und in dem sich daran anschließenden vorderen Himmelsegment (21) die Luftkanäle (25, 26) mit den Luftausströmern (27) integriert sind.

2. Fahrgastzelle nach Anspruch 1,
**dadurch gekennzeichnet,**
**dass** die zusammengesetzten Himmelsegmente (21, 22) einen steifen Klimahimmelmodul (20) bilden, der mit Abstand von der Dachunterseite an Beplankungen (18) des Dachs (16) befestigt ist.

3. Fahrgastzelle nach Anspruch 1 oder 2,
**dadurch gekennzeichnet,**
**dass** die Integration der Luftkanäle (25, 26) mittels Hutprofil aufweisender Kanalrinnen (251, 261) vorgenommen ist, die auf die der Dachunterseite zugekehrte Außenseite des vorderen Himmelsegments (21) des Himmels (17) aufgesetzt sind.

4. Fahrgastzelle nach Anspruche 3,
**dadurch gekennzeichnet,**
**dass** die Kanalrinnen (251, 261) für die Luftkanalintegration als einstückiges Tiefziehteil (23) gefertigt sind und dass das Tiefziehteil (23) mittels Ultraschallschweißen mit dem vorderen Himmelsegment (21) fest verbunden ist.

5. Fahrgastzelle nach einem der Ansprüche 1 - 4,
**dadurch gekennzeichnet,**
**dass** das Fondklimagerät (24) auf die dem Dach (16) zugekehrte Außenseite des hinteren Himmelsegments (22) aufgeschoben ist.

6. Fahrgastzelle nach einem der Ansprüche 1 - 5,
**dadurch gekennzeichnet,**
**dass** der Himmel (17) aus kaschierten Tubus-Waben-Platten gefertigt ist.

7. Fahrgastzelle nach Anspruch 6,
**dadurch gekennzeichnet,**
**dass** die Tubus-Waben-Platten auf der von der Dachunterseite abgekehrten Innenseite sehr fein perforiert sind.

8. Fahrgastzelle nach einem der Ansprüche 1 - 7,
**dadurch gekennzeichnet,**
**dass** der Anschluss der Längsluftkanäle (26) an die Luftauslässe des Fondklimageräts (24) mittels Formteile (30) vorgenommen ist, die in die Längsluftkanäle (25) eingesteckt sind.

9. Fahrgastzelle nach einem der Ansprüche 1 - 8,
**dadurch gekennzeichnet,**
**dass** an jedem Längsluftkanal (25) ein über mindestens eine Seitenscheibe (10) des Fond (12) sich erstreckender Scheibenluftkanal (32) angeschlossen ist, der Luftaustrittsschlitze mit zu den Seitenscheiben (10) gerichteter Luftausblasrichtung aufweist.

10. Fahrgastzelle nach Anspruch 9,
**dadurch gekennzeichnet,**
**dass** der Scheibenkanal (32) im Kopfaufschlagbereich eines auf dem äußeren Sitzplatz (131 , 141) angeschnallten Fahrgastes (19) angeordnet ist.

11. Fahrgastzelle nach Anspruch 9 oder 10,
**dadurch gekennzeichnet,**
**dass** der Anschluß des Scheibenkanals (32) mittels mindestens eines der Kontur des Dachverlaufs angepaßten Verbindungskanals (33) vorgenommen ist.

12. Fahrgastzelle nach einem der Ansprüche 1 - 11,
**dadurch gekennzeichnet,**
**dass** bei einer dreisitzigen Sitzreihe (13, 14) ein dem mittleren Sitz (131, 141) zugeordneter Luftausströmer (27) in dem Querluftkanal (26) und je ein den beiden äußeren Sitzen (131, 141) zugeordneter Luftausströmer (27) in den beiden Längsluftkanälen (25) angeordnet ist und alle drei Luftausströmer (27) in einer zur Sitzreihe (13, 14) parallelen Fluchtlinie liegen.

## Claims

1. Passenger compartment of a motor vehicle, in particular a large-capacity motor vehicle, with a rear (12) fitted with multi-seat rows of seats (13, 14), having a roof (16), a head lining (17) lining the roof underside and side windows (10), a rear air conditioning unit (24) disposed on the roof underside at the rearward end of the rear (12) and having air outlets to each of which is connected one of two longitudinal air ducts (25) extending on the right-hand and left-hand side underneath the roof (16) as far as the front end of the rear (12), and having transverse air ducts extending underneath the roof (16) and connected to the two longitudinal air ducts (25), each of which is assigned to a row of seats (13, 14) and runs at a distance in front of it, which air ducts (25, 26) have a number of air discharge units (27) corresponding to the number of seats (131, 141) in the rows of seats (13, 14), preferably with an air outlet direction which can be adjusted within limits, each of which is spatially assigned to a seat (131, 141),
**characterised in that**
the region of the head lining (17) spanning the rear (12) is made up of a front and a rear head lining segment (21, 22) which can be joined to one another and the rear head lining segment (22) covers the air conditioning unit (24) and the air ducts (25, 26) incorporating the air discharge units (27) are integrated in the adjoining front head lining segment (21).

2. Passenger compartment as claimed in claim 1,
**characterised in that**
the assembled head lining segments (21, 22) form a rigid air conditioning head lining module (20) which is secured to panelling (18) of the roof (16) at a distance from the roof underside.

3. Passenger compartment as claimed in claim 1 or 2,
**characterised in that**
the air ducts (25, 26) are integrated by means of duct channels (251, 261) with a cap-shaped contour, which are placed on the external face of the front head lining segment (21) of the head lining (17) facing the roof underside.

4. Passenger compartment as claimed in claim 3,
**characterised in that**
the duct channels (251, 261) for air duct integration are made in the form of an integral deep-drawn part (23) and the deep-drawn part (23) is fixedly joined to the front head lining segment (21) by means of ultrasound welding.

5. Passenger compartment as claimed in one of claims 1 to 4,
**characterised in that**
the rear air conditioning unit (24) is pushed onto the external face of the rear head lining segment (22) facing the roof (16).

6. Passenger compartment as claimed in one of claims 1 to 5,
**characterised in that**
the head lining (17) is produced from lined tube-honeycomb plates.

7. Passenger compartment as claimed in claim 6,
**characterised in that**
the tube-honeycomb plates have very fine perforations on the internal face remote from the roof underside.

8. Passenger compartment as claimed in one of claims 1 to 7,
**characterised in that**
the longitudinal air ducts (26) are connected to the air outlets of the rear air conditioning unit (24) by means of moulded parts (30) which are inserted in the longitudinal air ducts (25).

9. Passenger compartment as claimed in one of claims 1 to 8,
**characterised in that**
a window air duct (32) extending above at least one side window (10) of the rear (12) having air outlet slots with an air blowing direction directed towards the side windows (10) the is connected to every longitudinal air duct (25).

10. Passenger compartment as claimed in claim 9,
**characterised in that**
the window duct (32) is disposed in the region of the head of a passenger (19) strapped into the outer seat (131, 141) to which air is directed.

11. Passenger compartment as claimed in claim 9 or 10,
**characterised in that**
the window duct (32) is connected by means of a connecting passage (33) adapted to the contour of the roof shape.

12. Passenger compartment as claimed in one of claims 1 to 11,
**characterised in that**
an air discharge unit (27) assigned to the middle seat (131, 141) in a three-seat row of seats (13, 14) is disposed in the transverse air duct (26) and an air discharge unit (27) assigned to each of the outer seats (131, 141) is provided in the two longitudinal air ducts (25) and all three air vents (27) lie in a flush line parallel with a row of seats (13, 14).

## Revendications

1. Habitacle d'un véhicule, en particulier d'un véhicule à grande capacité, comprenant un fond (12) équipé de rangées de sièges (13, 14) multi-places, un toit (16), un habillage de plafond (17) sur la face inférieure de toit et des vitres latérales (10), un climatiseur de fond (24) disposé sur la face intérieure de toit au niveau de l'extrémité arrière du fond (12) et muni de sorties d'air, auxquelles est raccordé respectivement un de deux canaux d'air longitudinaux droite et gauche s'étendant sous le toit (16) jusqu'à l'extrémité avant du fond (12), et des canaux d'air transversaux raccordés aux deux canaux d'air longitudinaux (25) et s'étendant sous le toit (16), dont respectivement un est associé à une rangée de sièges (13, 14) et s'étend à distance de celle-ci, dans les canaux d'air (25, 26) au moins un nombre de diffuseurs d'air (27) correspondant au nombre de sièges (131, 141) dans les rangées de sièges (13, 14) étant disposés avec une direction de diffusion d'air de préférence réglable de manière limitée, dont respectivement un est associé dans l'espace à un siège (131, 141), **caractérisé en ce que** la zone de l'habillage de plafond (17) tendue au-dessus du fond (12) est assemblée à partir d'un segment d'habillage de plafond avant et d'un segment d'habillage de plafond arrière (21, 22) pouvant être reliés, et que le segment d'habillage de plafond arrière (22) recouvre le climatiseur de fond (24), et dans le segment d'habillage de plafond avant (21) raccordé au segment arrière sont intégrés les canaux d'air (25), 26) munis des diffuseurs d'air (27).

2. Habitacle selon la revendication 1, **caractérisé en ce que** les segments d'habillage de plafond (21, 22) assemblés forment un module d'habillage climatique rigide (20) qui est fixé à des revêtements (18) du toit (16) à distance de la face inférieure du toit.

3. Habitacle selon la revendication 1 ou 2, **caractérisé en ce que** l'intégration des canaux d'air (25, 26) est réalisée au moyen de conduits (251, 261) présentant un profil de chapeau qui sont placés sur la face extérieure du segment avant (21) de l'habillage de plafond (17) tournée vers la face inférieure de toit.

4. Habitacle selon la revendication 3, **caractérisé en ce que** les conduits (251, 261) pour l'intégration des canaux d'air sont réalisés sous la forme d'une pièce emboutie (23) d'un seul tenant, et la pièce emboutie (23) est reliée à demeure au segment d'habillage de plafond avant (21) au moyen de soudage à ultrasons.

5. Habitacle selon l'une quelconque des revendications 1 à 4, **caractérisé en ce que** le climatiseur de fond (24) est glissé sur la face extérieure du segment d'habillage de plafond arrière (22) tournée vers le toit (16).

6. Habitacle selon l'une quelconque des revendications 1 à 5, **caractérisé en ce que** l'habillage de plafond (17) est réalisé à partir de plaques tubulaires alvéolaires contrecollées.

7. Habitacle selon la revendication 6, **caractérisé en ce que** sur la face intérieure opposée à la face inférieure de toit, les plaques tubulaires alvéolaires présentent des perforations très fines.

8. Habitacle selon l'une quelconque des revendications 1 à 7, **caractérisé en ce que** le raccordement des canaux d'air longitudinaux (26) aux sorties d'air du climatiseur de fond (24) s'effectue au moyen de pièces moulées (30) emboîtées dans les canaux d'air longitudinaux (25).

9. Habitacle selon l'une quelconque des revendications 1 à 8, **caractérisé en ce qu'**à chaque canal d'air longitudinal (25) est raccordé un canal d'air de vitre (32) qui s'étend sur au moins une vitre latérale (10) du fond (12) et présente des fentes de sortie d'air avec une direction de soufflage d'air orientée vers les vitres latérales (10).

10. Habitacle selon la revendication 9, **caractérisé en ce que** le canal de vitre (32) est disposé dans la zone d'impact de la tête d'un passager (19) attaché sur le siège extérieur (131, 141).

11. Habitacle selon la revendication 9 ou 10, **caractérisé en ce que** le raccordement du canal de vitre (32) s'effectue au moyen d'au moins un canal de liaison (33) adapté au contour de l'allure du toit.

12. Habitacle selon l'une quelconque des revendications 1 à 11, **caractérisé en ce que** pour une rangée de sièges (13, 14) à trois places un diffuseur d'air (27) associé au siège central (131, 141) est disposé dans le canal d'air transversal (26), et respectivement un diffuseur d'air (27) associé aux deux sièges extérieurs (131, 141) est disposé dans les deux canaux d'air longitudinaux (25), et les trois diffuseurs d'air (27) se situent dans un alignement parallèle à la rangée de sièges (13, 14).
